# EUROPEAN PATENT SPECIFICATION

(11) **EP 2 583 941 B1**
(45) Date of publication and mention of the grant of the patent: **05.04.2017**
(21) Application number: 12165127.7
(22) Date of filing: 23.04.2012
(51) Int. Cl.: C01B 32/20, B01D 67/00, B01D 69/10, B01D 69/12, B01D 71/02, B82Y 30/00, B82Y 40/00

(54) **Method of production of thin, transparent and electrically conductive graphene layer**
Verfahren zum Herstellung von dünnen, transparenten und elektrisch leitenden Graphenschicht
Procédé de production de la couche de graphene mince, transparente et électriquement conductrice

(30) Priority: 20.10.2011 LT 2011094
(43) Date of publication of application: 24.04.2013
(73) Proprietor: Vilniaus universitetas, 01513 Vilnius (LT)
(72) Inventor: BARKAUSKAS, Jurgis, 06310 Vilnius (LT)
(74) Representative: Klimaitiene, Otilija

(56) References cited:
- WO-A2-2008/143829
- US-A1- 2010 128 439
- GOKI EDA ET AL: "Large-area ultrathin films of reduced graphene oxide as a transparent and flexible electronic material", NATURE NANOTECHNOLOGY, vol. 3, no. 5, 1 May 2008 (2008-05-01), pages 270-274, XP055002980, ISSN: 1748-3387, DOI: 10.1038/nnano.2008.83
- YANYUN LIU ET AL: "Flower-like zinc oxide deposited on the film of graphene oxide and its photoluminescence", MATERIALS LETTERS, NORTH HOLLAND PUBLISHING COMPANY. AMSTERDAM, NL, vol. 65, no. 12, 24 March 2011 (2011-03-24), pages 1885-1888, XP028349771, ISSN: 0167-577X, DOI: 10.1016/J.MATLET.2011.03.097 [retrieved on 2011-03-31]
- MARTIN SCHALLER ET AL: "Models of oral and vaginal candidiasis based on in vitro reconstituted human epithelia", NATURE PROTOCOLS, NATURE PUBLISHING GROUP, GB, vol. 1, no. 6, 1 December 2006 (2006-12-01), pages 2767-2773, XP008166008, ISSN: 1750-2799, DOI: 10.1038/NPROT.2006.474 [retrieved on 2007-01-18]

## Description

The invention relates to the methods of production of thin electro-conductive transparent coatings (layers), namely to the methods of production of thin electro-conductive transparent graphene layers, which can be used as electrodes in electro-optical devices, including solar batteries, LCD monitors, sensors, etc.

Many modem electronic devices are using electrodes, one of which must be both electroconductive and optically transparent. These electrodes are necessary for the production of different types of touch screens, solar cells, fiber optic segments, modulators, sensors and tranducers. Optically transparent layer of different thickness is required to transmit no less than 50 % of the electromagnetic radiation. If this rate is less than 50 %, the layer is characterized as semi-transparent. Thickness of a layer is inversely proportional to its transparency; thinner layers transmit more electromagnetic radiation. Currently, substances used for the production of optically transparent and electro-conductive layers are mixed oxides, such as indium-tin oxide (ITO). The main disadvantages of oxide layers are rigidity, fragility and low resistance to abrasion. Technology of ITO layer production, which includes the stages of high-temperature spray pyrolysis, may be incompatible with their use in the devices listed above.

Graphene, a new-discovered carbon allotrope, has a metallic conductivity (resistance of graphene layer with up to 80 % transparency can reach several hundreds of ohms), mechanical strength (Young's modulus - 0,5 TPa, tensile strength - 130 GPa), flexibility (elastic modulus - 1 - 5 N/m). Chemical resistivity of graphene is much higher in comparison with that of ITO. Thin layers of graphene absorb a small part of electromagnetic radiation (one layer ∼ 2.3 % of radiation) [A.K. Geim, Science, 234, 1530, (2009)]. These properties allow to expect that graphene is able not only replace widely used ITO from its current leading positions, but also expand the application possibilities of transparent electrodes. In addition, high-temperature pyrolysis is not a necessary stage in the production of the graphene layers (coatings).

Production method of electro-conductive and optically transparent layers of graphene on polymer substrate is described in the patent application WO 2011046775. This method includes growth of graphene layer on a copper foil by CVD method, transfer of a polymer substrate by dissolving copper, and later - transfer on other substrates.

A known method is expensive and time-consuming because the growth of graphene layer takes place at high temperatures and requires sophisticated equipment and time. Multiple-transfer procedure of the grapheme layer may reduce the quality of graphene layer and is time-consuming.

In the patent application US 2009017211 is described a transparent graphene layer fabrication method by using functionalized graphene nanoparticles and different production techniques. One of these methods includes a vacuum-filtration of aqueous suspension prepared from the functionalized graphene nanoparticles through the porous polymer membrane filter, leading to the formation of thin graphene layer, which is then washed and dried.

Aqueous suspensions of functionalized graphene nanoparticles are prepared by using surfactants. Remains of surfactants in graphene layer may worsen its properties (transparency, electrical conductivity). To remove these remains, graphene layer is washed several times with distilled water; which increases the time of production and reduces the quality of resulting graphene layer, therefore, it is impossible to obtain very thin and highly electro-conductive graphene layers using this method.

Closest to the present invention according to the technical solution is method of production of thin, transparent and electrically conductive grapheme layer described in GOKI EDA ET AL: "Large-area ultrathin films of reduced grapheme oxide as a transparent and flexible electronic material", NATURE NANOTECHNOLOGY, vol.3, no.5, 1 May 2008 (2008-05-01), pages 270-274. This document discloses a method, comprising preparation of aqueous suspension of graphite oxide, filtration of prepared aqueous suspension of graphite oxide through a porous polymer filter, namely through the mixed cellulose ester membrane, wherein the nanoparticles of graphite oxide are deposited on surface of the porous polymer filter and form a thin layer of graphite oxide, which is washed, dried and reduced with reducing agent to grapheme. The obtained grapheme is treated to the remains of reducing agent, and dried.

It is impossible to obtain very thin and highly electro-conductive graphene layers using this method.

The present invention seeks to provide a method to obtain thinner graphene layer of better quality and higher electro-conductivity as filed in claims 1-5.

According to the present invention there is proposed a method for production of electro-conductive transparent graphene layer, comprising preparation of aqueous suspension of graphite oxide, filtration of prepared aqueous graphite oxide suspension through the porous polymer filter, during which the particles of graphite oxide are deposited on the said filter surface and forms a thin layer, wherein the said porous polymer filter is polycarbonate membrane filter through which the said aqueous graphite oxide suspension is filtered into alkaline media, which interacts through the above-mentioned polycarbonate membrane filter with the aqueous suspension of graphite oxide destroying it, and graphite oxide nanoparticles are deposited on the surface of the polycarbonate membrane filter forming a thin layer, which is washed, dried and reduced with reducing agent to graphene, the obtained graphene layer is washed to remove the remains of reducing agent, and dried.

Filtering of the said aqueous graphite oxide suspension by using the polycarbonate membrane filters with smoother surface as possible, which can be obtained by selecting filters with even distributed pores, allows to produce thinner layers in comparison with these obtained using other types of filters. Further filtration into the alkaline media allows to produce a smother graphite oxide layer with better adhesion to polycarbonate substrate of the membrane filter, what will improve the quality of the graphene layer.

Graphite oxide aqueous suspension for filtration may be prepared during a two-stage process, in the first stage a GO powder is soaked in distilled water, stirred and sonicated to obtain homogeneous suspension of distributed evenly graphite oxide particles with concentrations range of 1.0 10⁻⁴ - 2.0 10⁻⁴ g/ml, later in the second stage, suspension obtained in the first stage is diluted by the distilled water up to concentration range 2.5 10⁻⁶ - 3.5 10⁻⁶ g/ml, stirred, sonicated to obtained homogeneous suspension of evenly distributed graphite oxide particles again.

Alkaline medium is a 0.1 M KOH solution into which is filtered graphite oxide aqueous suspension obtained in the second stage, through polycarbonate membrane filter, which from outside is immersed in the said alkaline solution and graphite oxide aqueous suspension is destroyed in the filter zone during the filtration process and the graphite oxide nanoparticles are deposited on the surface of polycarbonate membrane filter, adhere to it and form a thin layer of graphite oxide Solution of 0.1 M KOH is able both destroy the graphite oxide aqueous suspension and activate the surface of polycarbonate, this produces a smother graphite oxide layer with better adhesion to polycarbonate substrate of the membrane filter. Smooth surface of polycarbonate membrane filter is also beneficial to the better quality of obtained layer.

Reducing agent is a sulfur-containing solution, and it may be NaHSO₃ solution.

Polycarbonate membrane filter may be removed by dissolving it in alkaline solution, and the remaining thin layer of graphene can be used as a transparent electrode.

Embodiment of the present invention is explained in more detail by a drawing showing the filtration equipment, which is used to obtain a thin layer of graphene by means of proposed method.

According to the invention, proposed method of the production of thin electro-conductive transparent graphene layer includes the following sequence of operations. Preparation of graphite oxide aqueous suspension. This is carried out by a two-stage process. In the first stage, a homogeneous suspension of distributed evenly graphite oxide particles with concentrations range of 1.0 10⁻⁴ - 2.0 10⁻⁴ g/ml is prepared. In the second stage, suspension, obtained in the first stage, is diluted by the distilled water up to concentration range 2.5 10⁻⁶ - 3.5 10⁻⁶ g/ml, stirred, sonicated to obtain homogeneous suspension of evenly distributed graphite oxide particles again. Obtained suspension in the second stage is filtered through the nucleopore polycarbonate membrane filter into alkaline media, preferably into 0.1 M KOH solution, which, during the filtration process, interacts with the graphite oxide aqueous suspension through the said filter, destroing the graphite oxide aqueous suspension and graphite oxide nanoparticles are deposited on the filter surface forming a thin layer, which is rinsed, dried and chemically reduced to graphene using a reducing agent, preferably NaHSO₃ solution. Obtained graphene layer is rinsed to remove the residues of reducing agent and dried.

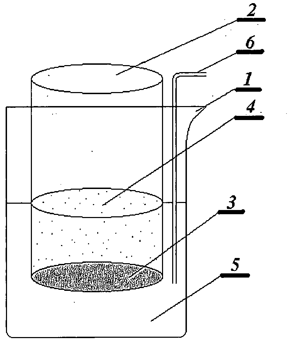

According to the present invention, to produce a thin layer of graphene the procedure of filtration of graphite oxide aqueous suspension through a nucleopore polycarbonate membrane filter into the alkaline solution should be carried out and performed by using equipment shown in Fig. 1, which consists of beaker 1 inside of which is placed glass cylinder 2. At the bottom of the cylinder 2 is attached the nucleopore polycarbonate membrane filter 3. Cylinder 2 is intended to place the graphite oxide aqueous suspension 4, and the beaker 1 is intended to place the alkaline solution, preferably 0.1 M KOH solution. Besides, the beaker 1 is equipped with a suction tube 6.

Detailed description of a preferential embodiment of proposed method.

The oxidized product is prepared from graphite precursor. In a beaker, which is placed on a heated magnetic stirrer, 15.0 g of graphite powder is mixed with 36 ml of conc. H₂SO₄ at a temperature of 80 °C. After formation of suspension, 7.5 g K₂S₂O₈ and 7.5 g P₂O₅ are added. The mixture is stirred at a temperature of 80 °C for 4 h, then cooled to the room temperature, diluted with 1500 ml of distilled water and left for 24 h. The product is then filtered, washed with distilled water to a neutral reaction and dried in the air. The yield of the product is 10.0 g. By this way prepared oxidized graphite is used for the synthesis of GO by Hummers method. For this purpose, using a similar reaction apparatus additionally supplemented with cooling vessel, 10.0 g of fine graphite powder, 5.0 g of NaNO₃ are suspended in 230 ml of conc. H₂SO₄. Under intensive stirring, 30.0 g of KMnO₄ is added during the 6 - 8 h period. When adding KMnO₄, the mixture is maintained at a temperature not exceeding 0 °C. After adding the entire amount of KMnO₄, the mixture is kept cold over a night, then heated to 35 °C, and after ½ h slowly diluted with 460 ml of distilled water, preventing the temperature to rise above 70 °C. After diluting, the suspension is kept at a temperature of 70 °C for the period of 15 min, and diluted again with 1.4 l of distilled water. Formed MnO₂ and remaining KMnO₄ are reduced with concentrated H₂O₂. Worm yellowish-brown suspension is filtered through a vacuum filter and washed. Remains of acids and other by-products are removed from graphite oxide by centrifugation of aqueous suspensions. For this purpose product is mixed with 400 ml of distilled water, agitated in a shaker for 30 min and placed in a centrifuge, which is operating at a speed of 5500 rpm. The operation repeated until the pH of suspension reaches ∼ 5.5 (measured by a pH-meter). Brown powder of graphite oxide is filtered and dried in a vacuum desiccators. Yield of GO reaches 15 g; the product is stored in a refrigerator.

Next step is the preparation of the aqueous suspension of graphite oxide.

0.15 g of the prepared graphite oxide is weighed an electron balance. Powder is placed into a 25 ml beaker, poured with 10 ml of distilled water and agitated for 12 h in a shaker at 160 rpm. After that time solution is sonicated for 1 h at 13 % amplitude of electrode. Solution after sonication is diluted in a measuring flask to 100 ml, placed to a large beaker and sonicated 1 h at 15 % amplitude of electrode. 10 ml of prepared solution is poured into a 100 ml measuring flask, diluted again to 100 ml and sonicated at 15 % amplitude of electrode. Concentration of prepared graphite oxide aqueous suspension equals 1.5·10⁻⁴ g/ml; this suspension (which should be not older than 3 days) is used for the preparation of more diluted working suspension just before filtration.

### Preparation of graphite oxide layer.

2.0 ml of 1.5·10⁻⁴ g/ml graphite oxide aqueous suspension is diluted in a measuring flask to the 100 ml mark to receive suspension concentration 3.0·10⁻⁶ g/ml. Solution is placed into a bigger beaker and sonicated at 15 % amplitude of electrode. 21 ml of this solution is poured into a filtration unit shown in drawing. Filtration equipment comprises the glass cylinder 2 (∅4,2 cm, h=10 cm) with nucleopore polycarbonate membrane filter 3, ("Milipore", pore ∅ - 0.4 µm) which is attached to the bottom of cylinder 2 using water-resistant glue (Moment). The cylinder 2 is placed into the beaker 1 (500 ml) with alkaline solution, namely, 200 ml 0.1 M KOH solution so, that filter 3 would be at the bottom, trying to maintain the horizontal position of polycarbonate membrane filter 3 (checking with a spirit level). A level of graphite oxide aqueous suspension 4 inside the cylinder 2 is equalized with a level of alkaline solution (0.1 M KOH solution) 5 inside the beaker 1. The solutions in so prepared equipment are left for 1 h and after that time alkaline solution 0.1 M KOH from the outer beaker 1 is slowly sucked (1 ml/min, by using a peristaltic pump) until the levels of solutions inside the cylinder 2 and inside the outer beaker 1 will equalized at the polycarbonate membrane filter level. Then suction procedure is interrupted, and cylinder 2 with stuck polycarbonate membrane filter is carefully transferred on a filter paper placed on a glass plate. When the liquid residue is completely removed, polycarbonate membrane filter with the obtained 20 nm layer of graphite oxide is left to dry for at least 12 h.

### Reduction of graphite oxide-layer to graphene.

The cylinder 2 with polycarbonate membrane filter 3, on which graphite oxide layer is formed, is placed on a glass plate with filter paper. 20 ml of 10 % NaHSO₃ solution is carefully poured inside the cylinder 2 and left for 6 h. Later the solution of NaHSO₃ is carefully poured off, polycarbonate membrane filter is gently washed by pouring three times 20 ml-portions of distilled water, and left on the sheet of filter paper for 1 h. At the end of the process cylinder is placed on the dry sheet of filter paper, polycarbonate membrane filter with the graphene layer is dried and cut-off from the glass cylinder.

If necessary, the polycarbonate membrane filter (substrate) can be removed by dissolving it in 1M KOH solution.

## Claims

1. Method of production of thin, transparent and electrically conductive graphene layer comprising preparation of aqueous suspension (4) of graphite oxide, filtration of prepared aqueous suspension (4) of graphite oxide through a porous polymer filter using a filtering equipment, wherein
during the filtration process the nanoparticles of graphite oxide are deposited on surface of
the porous polymer filter and forms a thin layer of graphite oxide, which is washed, dried and reduced with reducing agent to graphene,
the obtained layer of graphene is washed to remove remains of the reducing agent and dried, **characterised in that**
the porous polymer filter is a polycarbonate membrane filter (3) through which the aqueous suspension (4) of graphite oxide is filtered into an alkaline media, preferably into 0,1 M KOH solution (5), wherein
the filtering equipment used in filtration process comprises:
a glass cylinder (2) for the aqueous suspension (4) of graphite oxide to a bottom of which is attached the polycarbonate membrane filter (3) and a beaker (1) for alkaline media (5),
whereas
preparation of the filtering equipment for filtration and carrying out the filtration process comprises the steps of:
- placing the glass cylinder (2) into the beaker (1) with an alkaline media (5), preferably with 0,1 M KOH solution, in such a manner that polycarbonate membrane filter (3) is immersed into alkaline media (5),
- placing aqueous suspension (4) of graphite oxide into the glass cylinder (2),
- maintaining the horizontal position of the polycarbonate membrane filter (3),
- equalizing a level of the aqueous suspension (4) of graphite oxide inside the glass cylinder (2) with a level of the alkaline media (5) inside the beaker (1),
- leaving such prepared filtering equipment for a duration of filtration process, of 1 h, after that time, sucking of the alkaline media (5) from the beaker (1) is performed until the level of the alkaline media (5) inside the beaker (1) and the level of the aqueous suspension (4) of graphite oxide inside the glass cylinder (2) will equalized at the polycarbonate membrane filter (3) level, than suction procedure is interrupted and the glass cylinder (2) with the thin layer of the graphite oxide formed on the surface of the polycarbonate membrane filter (3) is removed from the beaker (1).

2. Method according to the claim 1, **characterised in that** the aqueous suspension of graphite oxide is prepared for filtration in a two-stage process,
- in the first stage the powder of graphite oxide is soaked in distilled water, stirred and sonicated to obtain a homogeneous suspension with equally distributed nanoparticles of graphite oxide with concentration in the range from 1.0·10⁻⁴ to 2.0·10⁻⁴ g/ml,
- in the second stage suspension of graphite oxide obtained in the first stage is diluted with distilled water to the concentration in the range from 2.5 10⁻⁶ to 3.5 10⁻⁶ g/ml, stirred and sonicated again to obtain a homogeneous suspension with equally distributed nanoparticles of graphite oxide.

3. Method according to claim 1 or claim 2, **characterised in that** the alkaline media (5) is sucked from the beaker (1) 1ml/min by using a peristaltic pump.

4. Method according to any one of claims 1 to 3, **characterised in that** the reducing agent is sulfur-containing solution, preferably NaHSO₃ solution.

5. Method according to any one of claims 1 to 4, **characterised in that** the polycarbonate membrane filter (3) has pore diameter of 0,4 µm.

## Patentansprüche

1. Verfahren zur Herstellung einer dünnen, transparenten und elektrisch leitfähigen Graphenschicht, umfassend die Herstellung einer wässrigen Suspension (4) aus Graphitoxid, die Filtration der hergestellten wässrigen Suspension (4) aus Graphitoxid durch einen porösen Polymerfilter mithilfe einer Filterausrüstung, wobei sich während des Filterprozesses die Nanopartikel des Graphitoxids auf der Oberfläche des porösen Polymerfilters ablagern und eine dünne Schicht aus Graphitoxid bilden, die ausgewaschen, getrocknet und mit einem Reduktionsmittel zu Graphen reduziert wird,
die erhaltene Graphen Schicht ausgewaschen wird, um Reste des Reduktionsmittels zu entfernen, und getrocknet wird, **dadurch gekennzeichnet, dass**
der poröse Polymerfilter ein Polycarbonat-Membranfilter (3) ist, durch den die wässrige Suspension (4) aus Graphitoxid in ein alkalisches Medium, bevorzugt in eine 0,1 M KOH-Lösung (5), gefiltert wird, wobei die für den Filterprozess verwendete Filterausstattung folgendes umfasst:
einen Glaszylinder (2) für die wässrige Suspension (4) aus Graphitoxid, an dessen Boden der Polycarbonat-Membranfilter (3) angebracht ist, und einen Becher (1) für das alkalische Medium (5), wobei
die Vorbereitung der Filterausstattung für das Filtern und die Durchführung des Filterprozesses folgende Schritte umfasst:
- Platzierung des Glaszylinders (2) im Becher (1) mit einem alkalischen Medium (5), bevorzugt 0,1 M KOH-Lösung, derart, dass der Polycarbonat-Membranfilter (3) in das alkalische Medium (5) eingetaucht wird,
- Platzierung der wässrigen Lösung (4) aus Graphitoxid im Glaszylinder (2),
- Bewahrung der horizontalen Position des Polycarbonat-Membranfilters (3),
- Angleichung der Füllhöhe der wässrigen Lösung (4) aus Graphitoxid im Glaszylinder (2) mit die Füllhöhe des alkalischen Mediums (5) im Becher (1),
- Ruhenlassen dieser vorbereiteten Filterausstattung für die Dauer des Filterprozesses von 1 h,
nach dieser Zeit wird die Absaugung des alkalischen Mediums (5) aus dem Becher (1) durchgeführt so lange stattfindet bis die Füllhöhe des alkalischen Mediums (5) im Becher (1) und die Füllhöhe der wässrigen Lösung (4) aus Graphitoxid im Glaszylinder (2) einander auf der Höhe des Polycarbonat-Membranfilters (3) entsprechen,
und der Glaszylinder (2) mit der dünnen Schicht aus Graphitoxid, die sich auf der Oberfläche des Polycarbonat-Membranfilters (3) gebildet hat, vom Becher (1) entfernt wird.

2. Verfahren nach Anspruch 1, **dadurch gekennzeichnet, dass** die wässrige Lösung aus Graphitoxid für das Filtern in einem zweistufigen Prozess hergestellt wird, wobei
- in der ersten Stufe das Pulver aus Graphitoxid in destilliertes Wasser eingeweicht, umgerührt und beschallt wird, um eine homogene Suspension mit gleichmäßig verteilten Graphitoxid-Nanopartikeln mit einer Konzentration im Bereich von 1,0·10⁻⁴ bis 2,0·10⁻⁴ g/ml zu erhalten,
- in der zweiten Stufe die in der ersten Stufe erhaltene Suspension aus Graphitoxid mit destilliertem Wasser bis zu einer Konzentration im Bereich von 2,5 10⁻⁶ bis 3,5 10⁻⁶ g/ml verdünnt, umgerührt und erneut beschallt wird, um eine homogene Suspension mit gleichmäßig verteilten Graphitoxid-Nanopartikeln zu erhalten.

3. Verfahren nach einem der Anspruche 1 bis 2, **dadurch gekennzeichnet, dass** das alkalische Medium (5) mithilfe einer Schlauchpumpe mit 1 ml/min aus dem Becher (1) abgesaugt wird.

4. Verfahren nach einem der Anspruche 1 bis 3, **dadurch gekennzeichnet, dass** das Reduktionsmittel eine schwefelhaltige Lösung, bevorzugt eine NaHSO₃-Lösung, ist.

5. Verfahren nach einem der Anspruche 1 bis 4, **dadurch gekennzeichnet, dass** der Polycarbonat-Membranfilter (3) eine Porengröße von 0,4 µm aufweist.

## Revendications

1. Procédé de production d'une couche de graphène mince, transparente et conductrice d'électricité, comprenant la préparation d'une suspension aqueuse (4) d'oxyde de graphite, la filtration de la suspension aqueuse préparée (4) d'oxyde de graphite à travers un filtre de polymère poreux à l'aide d'un équipement de filtration, dans lequel, pendant le processus de filtration, des nanoparticules d'oxyde de graphite sont déposées sur la surface du filtre en polymère poreux et forme une couche mince d'oxyde de graphite, qui est lavé, séché réduit avec un agent réducteur pour graphène,
la couche obtenue de graphène est lavée pour enlever les restes de l'agent réducteur et puis séchée, elle **caractérisé en ce que**
le filtre polymère poreux est un filtre à membrane en polycarbonate (3) à travers duquel la suspension aqueuse (4) d'oxyde de graphite est filtrée dans un milieu alcalin, de préférence en solution 0,1 M de KOH (5), et dans lequel
l'équipement de filtration utilisé dans le processus de filtration comprend:
un cylindre de verre (2) pour la suspension aqueuse (4) d'oxyde de graphite au fond de laquelle est fixé le filtre à membrane en polycarbonate (3) et un bêcher (1) pour les milieux alcalins (5), tandis que
la préparation du matériel de filtrage pour la filtration et la mise en oeuvre du processus de filtration comprend les étapes consistant à:
- placer le cylindre de verre (2) dans le bécher (1) avec un milieu alcalin (5), de préférence d'une solution 0,1 M de KOH, de telle sorte que le filtre à membrane en polycarbonate (3) est plongé dans le milieu alcalin (5).
- placer une suspension aqueuse (4) d'oxyde de graphite dans le cylindre de verre (2),
- maintenir la position horizontale du filtre à membrane en polycarbonate (3),
- égaliser un niveau de la suspension aqueuse (4) d'oxyde de graphite à l'intérieur du cylindre en verre (2) à un niveau des milieux alcalins (5) à l'intérieur du bécher (1),
- laisser un tel équipement de filtrage préparé pour une durée de processus de filtration de 1 h, après cette période, l'aspiration des milieux alcalins (5) du bécher (1) est effectuée jusqu'à ce que le niveau du milieu alcalin (5) à l'intérieur du bécher (1) et le niveau de la suspension aqueuse (4) d'oxyde de graphite à l'intérieur le cylindre de verre (2) soit égalisé au niveau du filtre à membrane en polycarbonate (3) de niveau inférieur, que le processus d'aspiration soit interrompu et que le cylindre de verre (2) avec la couche mince de l'oxyde de graphite formée sur la surface du filtre à membrane en polycarbonate (3) soit retiré du bécher (1).

2. Procédé selon la revendication 1, **caractérisé en ce que** la suspension aqueuse d'oxyde de graphite est préparée pour la filtration dans un procédé à deux étapes, - dans la première étape, la poudre d'oxyde de graphite est trempée dans de l'eau distillée, agitée et traitée aux ultrasons pour obtenir une suspension homogène avec des nanoparticules d'oxyde équiréparties de graphite avec une concentration dans la plage de 1,0 × 10-4 à 2,0 × 10-4 g / ml,
- dans la deuxième étape la suspension d'oxyde de graphite obtenue dans la première étape est dilué avec de l'eau distillée à la concentration dans une plage de 2,5 à 3,5 10-6 10-6 g / ml, et que l'on a agité et traité par ultrasons à nouveau pour obtenir une suspension homogène égale des nanoparticules d'oxyde réparties de graphite.

3. Procédé selon la revendication 1 ou la revendication 2, **caractérisé en ce que** le milieu alcalin (5) soit aspiré du bécher (1) 1 ml / min en utilisant une pompe péristaltique.

4. Procédé selon l'une quelconque des revendications 1 à 3, **caractérisé en ce que** l'agent réducteur soit une solution contenant du soufre, de préférence une solution de NaHSO3.

5. Procédé selon l'une quelconque des revendications 1 à 4, **caractérisé en ce que** le filtre à membrane en polycarbonate (3) présente un diamètre de pores de 0,4.
